# EUROPEAN PATENT APPLICATION

(11) **EP 2 228 285 A2**
(43) Date of publication of application: **15.09.2010**
(21) Application number: 10156224.7
(22) Date of filing: 11.03.2010
(51) Int. Cl.: B62D 5/06

(54) **Power steering device**

(30) Priority: 13.03.2009 JP 2009060914
(71) Applicant: Kobelco Cranes Co., Ltd., Tokyo 141-8626 (JP); Kabushiki Kaisha Kobe Seiko Sho (Kobe Steel, Ltd.), Kobe-shi, Hyogo 651-8585 (JP)
(72) Inventor: Sugano, Naoki, Kobe-shi Hyogo 651-2271 (JP); Hori, Naoto, Kobe-shi Hyogo 651-2271 (JP); Kobayashi, Takahiro, Akashi-shi Hyogo 674-0063 (JP); Terasaka, Joji, Akashi-shi Hyogo 674-0063 (JP)
(74) Representative: TBK-Patent

(57) **Abstract**

The present invention provides a power steering device which can effectively reduce the operating force of a steering wheel and shorten the time from a release of the operating force to return of a vehicle to a straight traveling state. The device has a hydraulic pump 28, a power cylinder 30, a control valve 32 interposed therebetween, and a bypass line 50. The control valve 32 operates in synchronization with a steering wheel operation so as to be shifted between a communication position 42C for communicating cylinder chambers 36L and 36R of the power cylinder 30 with a tank 40, and a left-side supply position 42L and a right-side supply position 42R for introducing discharge oil of the hydraulic pump 28 to the cylinder chamber corresponding to the direction of the operation. The bypass line 50 bypasses the control valve 32 to allow hydraulic oil to flow from the expanded cylinder chamber to the contracted cylinder chamber, when the control valve 32 returns from either the supply position to the communication position.

## Description

### Technical Field

The present invention relates to a power steering device that is provided in a work vehicle and the like and reduces an operating force for a steering wheel by using hydraulic pressure.

### Background Art

As a conventional power steering device, there is known the one described in Japanese Patent Application Publication No. H11-20721. FIG. 5 shows the overview of this device. This device has a power cylinder 90 for providing an assist force to a steering mechanism 80, a hydraulic pump P for supplying hydraulic oil to the power cylinder 90, and a control valve 100 interposed between the hydraulic pump P and the power cylinder 90.

The steering mechanism 80 has a steering wheel 82, a steering shaft 84 that rotates integrally with the steering wheel 82, and a rack-and-pinion mechanism 88 that converts the rotation of the steering shaft 84 into an axial force (steering force) of a tie rod 86.

The power cylinder 90 has a cylinder main body 92, and a piston 94 loaded slidably in the cylinder main body 92. This piston 94, while partitioning the inside of the cylinder main body 92 into a left-side cylinder chamber 96R and a right-side cylinder chamber 96R, is continued to the tie rod 86. The piston 94 is operated by the hydraulic oil supplied to either one of the cylinder chambers 96L and 96R, thereby transmitting the axial force (assist force) to the tie rod 86.

The control valve 100 is interposed between the hydraulic pump P and the power cylinder 90, coupled to the steering shaft 84, and operated in synchronization with the rotation of the steering shaft 84 and the steering wheel 82, thereby switching on/off and direction of the supply of the hydraulic oil from the hydraulic pump P to the power cylinder 90.

Specifically, the control valve 100 is connected to the hydraulic pump P and a tank T through pump pipes 102 and 104 respectively, and further connected to the cylinder chambers 96L and 96R through cylinder pipes 106L and 106R respectively. The control valve 100 performs switching action as follows in synchronization with the rotation of the steering wheel 82.
1) When the steering wheel 82 is in a neutral position, the control valve 100 is kept at a position for letting the hydraulic oil (discharge oil) discharged from the hydraulic pump P escape into the tank T and communicatively connectng the both cylinder chambers 96L and 96R with the tank T (communication position). In this state, the assist force is not applied to the tie rod 86.
2) When the steering wheel 82 is steered from the neutral position to the right or left, the control valve 100 is shifted to a position for introducing the discharge oil to the cylinder chamber corresponding to this steering operation (the left-side cylinder chamber 96L, for example) and communicatively connecting the opposite cylinder chamber (the right-side cylinder chamber 96R, for example) with the tank T. This operates the piston 94, applying the assist force (the force reducing the operating force of the steering wheel 82) to the tie rod 86.

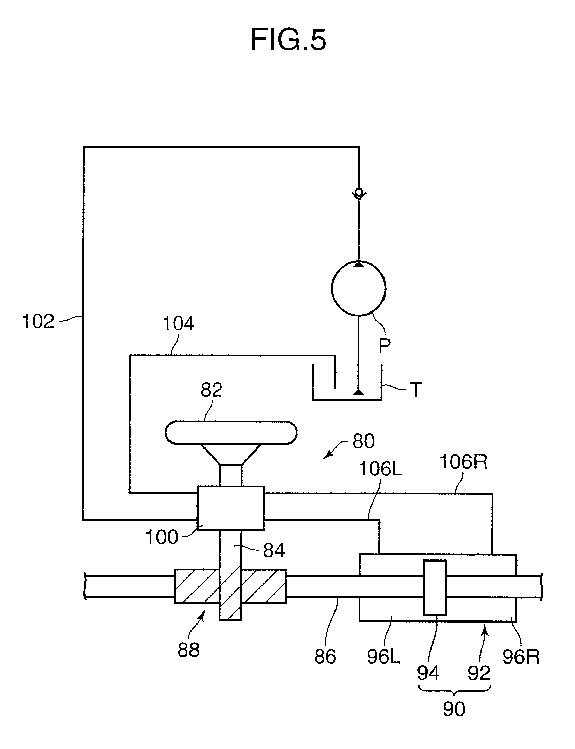

The conventional power steering device shown in FIG. 5 has a problem of extending time from the stop of the steering operation of the steering wheel 82 to the return of the steering wheel 82 and the wheels to the neutral position (i.e., the delay time until the vehicle returns to a straight traveling state).

Specifically, when the operating force is released in the state where the steering wheel 82 is steered to either one of the directions, the steered wheels receives a force from a road surface, namely self-aligning torque, to be automatically returned to the position where the steering angle is 0 (the position corresponding to the neutral position of the steering wheel 82); however, the power cylinder 90, which is coupled to the tie rod 86 at this moment, resists the return of the tie rod 86 and wheels to the straight traveling position.

More specifically, the return of the tie rod 86 to the straight traveling position requires the piston 94 of the power cylinder 90 coupled to the tie rod 86 to be returned to a central position. To allow the piston 94 to return so, the hydraulic oil within the cylinder chamber that has been expanded (the right-side cylinder chamber 96R, for example) needs to escape into the tank T through an oil passage in the control valve 100 (located in the communication position). However, the oil passage formed in the control valve 100, which has a small diameter and a large flow path resistance, resists the return of the piston 94 to the central position, thereby extending the time required for returning, i.e., the time required for the wheels to return to the straight traveling position.

### Disclosure of the Invention

The object of the present invention is to provide a power steering device which is capable of effectively reducing the operating force of a steering wheel and, with a simple configuration, reducing the time from the release of the operating force of the steering wheel to the return of the vehicle to the straight traveling state.

Provided is a power steering device for reducing an operating force of a steering wheel for changing a steering angle of a wheel, the power steering device comprising a hydraulic pump that discharges hydraulic oil, a power cylinder, a control valve, and a bypass line.

The power cylinder has a cylinder main body and a piston accommodated slidably in the cylinder main body to partition the inside of the cylinder main body into left-side and right-side cylinder chambers. Either one of the cylinder chambers receives a supply of discharge oil, which is the hydraulic oil discharged from the hydraulic pump, to operate the power cylinder in a direction corresponding to the cylinder chambers receiving the oil supply to reduce the operating force of the steering wheel.

The control valve is interposed between the hydraulic pump and the power cylinder. The control valve has: a communication position for communicatively connecting both of the cylinder chambers of the power cylinder to a tank while letting the discharge oil escape into the tank; a left-side supply position for introducing the discharge oil into the left-side cylinder chamber of the power cylinder; and a right-side supply position for introducing the discharge oil into the right-side cylinder chamber of the power cylinder. The control valve operates in synchronization with the steering wheel so as to stay at the communication position when the steering wheel is in a neutral position while being shifted to the left-side supply position or the right-side supply position corresponding to the operation of the steering wheel from the neutral position.

The bypass line provides a direct communication between the left-side cylinder chamber and the right-side cylinder chamber, bypassing the control valve. The bypass line has a flow characteristic which restricts a bypass flow amount of the hydraulic oil flowing through the bypass line to ensure supply pressure of the hydraulic oil high enough to enable the power cylinder to operate at least when the control valve is shifted to the left-side supply position or the right-side supply position while allows the hydraulic oil to flow from one of the cylinder chambers to the other when the control valve returns from the left-side supply position or the right-side supply position to the communication position.

According to this power steering device, the bypass line bypasses the control valve to allow the hydraulic oil to flow directly between the cylinder chambers of the power cylinder, thus enabling the vehicle to promptly return into the straight traveling state corresponding to the release of the operating force on the steering wheel. The specific functions thereof are as follows.

When the steering wheel is steered to either one of the directions, the control valve is shifted to either one of the supply positions (the right-side supply position, for example) and introduces the discharge oil into the cylinder chamber corresponding to the supply position (the right-side cylinder chamber, for example) to expand this cylinder chamber. When the operating force on the steering wheel is released in this state, the wheel receives, from the road surface, a force which forces the wheel to return back to the position where the steering angle is 0 (that is, self-aligning torque); however, in order to enable the wheel to actually return to the position, the hydraulic oil within the expanded cylinder chamber (the right-side cylinder chamber, for example) is required to be pushed out of the cylinder chamber.

In the above-mentioned conventional power steering device in which both of the cylinder chambers are simply connected to the control valve, the hydraulic oil of the expended cylinder chamber cannot flow out of the cylinder chamber promptly due to the large flow path resistance of the oil passage within the control valve, thus delaying the return of the wheels to the straight traveling position. On contrast, in the power steering device according to the present invention, the bypass line bypassing the control valve provides a direct communication between the expanded cylinder chamber and the opposite cylinder chamber (contracted cylinder chamber; the left-side cylinder chamber, for example), thereby letting the hydraulic oil of the expanded cylinder chamber out to the contracted cylinder chamber through a passage other than the control valve, and further the flow of the hydraulic oil into the contracted cylinder chamber accelerates the return of the piston (the return of the steering wheel to the position corresponding to the neutral position) in the power cylinder. This allows the prompt return of the wheels to the neutral position, resulting the prompt return of the vehicle to the straight traveling state.

On the other hand, when the steering wheel is steered to shift the control valve to the left-side supply position or the right-side supply position, the bypass line restricts the flow amount of the hydraulic oil therein, which is the bypass flow amount, so as to ensure supply pressure high enough to enable the power cylinder to operate. This flow characteristic allows the operating force on the steering wheel to be effectively reduced, as with the conventional power steering device.

Specifically, the bypass line can obtain the above flow characteristic by including a bypass pipe making a direct communication between the left-side cylinder and the right-side cylinder and a flow amount restricting section restricting the flow amount of the hydraulic oil in the bypass pipe, for example. This bypass line establishes both of ensuring the assist force for a steering operation and the prompt return of the vehicle to the straight traveling state when the operation is canceled, involving only setting the restriction details of the bypass flow amount in the flow amount restricting section, even though a general pipe is used as the bypass pipe, for example.

A preferable example of the flow amount restricting section is a restriction valve. By simply selecting the one with appropriate flow characteristics as the restriction valve (when a variable restriction valve is selected, the opening of thereof is adjusted appropriately), a preferred flow characteristic for obtaining the abovementioned functions can be realized.

Alternatively, it is also effective that the flow amount restricting section includes a selector valve whose opening is so variable as to change the flow amount in the bypass pipe, and a selector valve operating section that increases the opening of the selector valve when the control valve is in the communication position compared with the opening when the control valve is in the left-side supply position or the right-side supply position. According to this flow amount restricting section, when the steering wheel is steered to shift the control valve to the left-side supply position or the right-side supply position, the opening of the selector valve is reduced, thus ensuring sufficient supply pressure for the operation of the power cylinder: meanwhile, when the operating force of the steering wheel is released, the control valve returns to the communication position and the opening of the selector valve is increased to increase the bypass flow amount in the bypass line (the flow amount of the hydraulic oil flowing directly from the expanded cylinder chamber to the contracted cylinder chamber), thus accelerating return of the power cylinder (return of the steering wheel to the position corresponding to the neutral position) and return of the wheels to the straight traveling position.

The selector valve of the flow amount restricting section is preferably, for example, a pilot controlled valve including a pilot port into which pilot pressure is supplied and having a characteristic of reducing the opening of the pilot controlled valve as the supplied pilot pressure is raised. In this case, it will be effective that the flow amount restricting section includes a pilot line as the selector valve operating section, and the pilot line leads the discharge pressure of the hydraulic pump, to the pilot port, as the pilot pressure.

The flow amount restricting section can make a linkage between the operation of the control valve according to the operation of the steering wheel and the opening/closing action of the pilot controlled valve, only by leading the discharge pressure of the hydraulic pump to the pilot port of the pilot controlled valve. Specifically, when the steering wheel is steered to shift the position of the control valve to either one of the supply positions, the discharge pressure of the hydraulic pump is increased by the load of the power cylinder and the pilot pressure of the pilot controlled valve receiving the discharge pressure as the pilot pressure is also increased to suppress the opening of the pilot controlled valve; therefore, the bypass flow amount is restricted so as to ensure sufficient supply pressure for activating the power cylinder. On the other hand, when the operating force of the steering wheel is released and the control valve starts to return to the communication position, the discharge pressure of the hydraulic pump and the pilot pressure is lowered to increase the opening of the pilot controlled valve and the bypass flow amount, thus accelerating the return of the power cylinder to the neutral position and consequently realizing the prompt return of the vehicle to the straight traveling state.

### Brief Description of the Drawings

[FIG. 1] A hydraulic circuit diagram showing a power steering device according to a first embodiment of the present invention.
[FIG. 2] A hydraulic circuit diagram showing a power steering device according to a comparative example.
[FIG. 3] A hydraulic circuit diagram showing a power steering device according to a second embodiment of the present invention.
[FIG. 4] A hydraulic circuit diagram showing a power steering device according to a third embodiment of the present invention.
[FIG. 5] A diagram showing a conventional power steering device.

### Detailed Description of the Invention

Preferred embodiments of the present invention are now described with reference to the drawings.

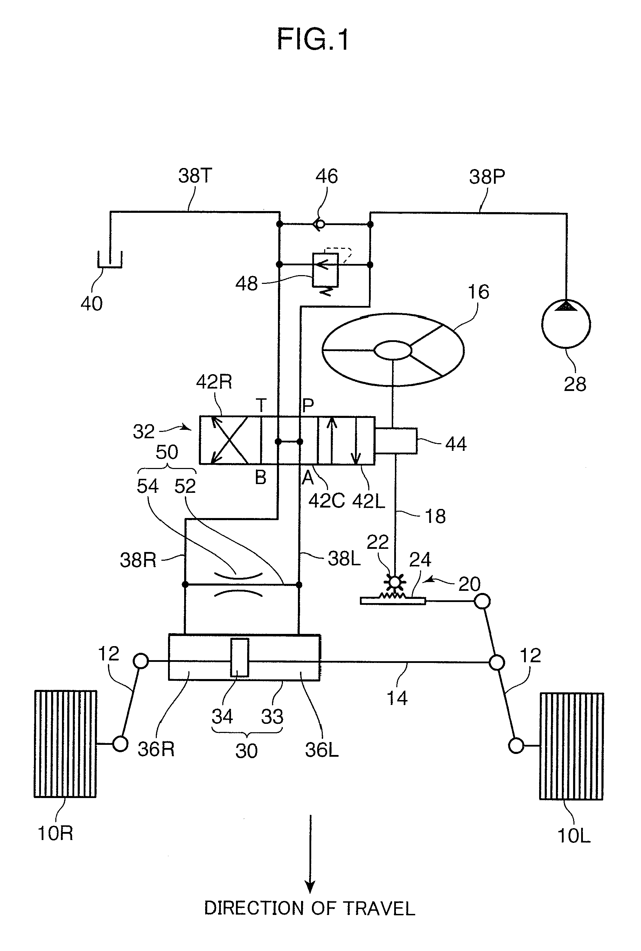

FIG. 1 is a hydraulic circuit diagram showing a steering mechanism provided with a power steering device according to the present invention. The steering mechanism has a knuckle arm 12 coupled to each of left and right wheels 10L and 10R, a tie rod 14 coupling the knuckle arms 12, a steering wheel 16 provided within an operator's room to be rotationally operated, a steering shaft 18 rotated integrally with the steering wheel 16, and a conversion mechanism 20 converting the rotation of the steering shaft 18 to a steering force (force swinging the left knuckle arm 12 in the diagram). In this embodiment, the conversion mechanism 20 has a pinion 22 rotated integrally with the steering shaft 18, and a rack 24 meshed with the pinion 22 and coupled to the knuckle arms 12.

The power steering device comprises a hydraulic pump 28 serving as a hydraulic source, a power cylinder 30 for applying an assist force to the steering mechanism, and a control valve 32 interposed between the power cylinder 30 and the hydraulic pump 28.

The power cylinder 30 has a cylinder main body 33 and a piston 34 loaded slidably in the cylinder main body 33. This piston 34 partitions the inside of the cylinder main body 33 into a left-side cylinder chamber 36L and a right-side cylinder chamber 36R, being coupled to the tie rod 14. When hydraulic oil is supplied to either one of the cylinder chambers 36L and 36R, the piston 34 is moved to the side opposite to the cylinder chamber into which the oil is supplied, transmitting the axial force (assist force) to the tie rod 14.

The control valve 32 is interposed between the hydraulic pump 28 and the power cylinder 30, being coupled to the steering shaft 18. In synchronization with the rotation of the steering shaft 18 and of the steering wheel 16, the control valve 32 performs an on/off switching operation and a direction switching operation for supplying the hydraulic oil from the hydraulic pump 28 to the power cylinder 30.

More specifically, the control valve 32 according to the present embodiment is a three-position selector valve having four ports (P port, T port, A port and B port), the P port connected to the hydraulic pump 28 through a pump pipe 38P, the T port connected to a tank 40 through a tank pipe 38T, the A port connected to the left-side cylinder chamber 36L through a left-side cylinder pipe 38L, and the B port connected to the right-side cylinder chamber 36R through a right-side cylinder pipe 38R. Besides, between the pump pipe 38P and the tank pipe 38T are provided a check valve 46 and a relief valve 48.

The control valve 32 has a sleeve not being shown and a spool rotatably accommodated within the sleeve, the spool being connected to the steering shaft 18 via a torsion bar 44. The torsion bar 44 receives a torsion torque from the steering shaft 18 due to the rotation of the steering shaft 18, rotating the spool by the torque. The rotation of the spool switches the position of the control valve 32 to three positions of a communication position 42C, a left-side supply position 42L, and a right-side supply position 42R reciprocally.

Specifically, when the steering shaft 18 and the steering wheel 16 are at the neutral position, the control valve 32 stays at the communication position 42C. On the other hand, when the steering wheel 16 is rotationally operated from the communication position 42C to the left, the control valve 32 is shifted to the left-side supply position 42L. When the steering wheel 16 is rotationally operated to the right, the control valve 32 is shifted to the right-side supply position 42R.

The communication position 42C is a position for making mutual communications among the four ports, that is, a position for letting the discharge oil out from the pump 28 to the tank 40 and communicate the cylinder chambers 36L and 36R with the tank 40. The left-side supply position 42L is a position for making a communication between the P port and the A port and a communication between the T port and the B port, that is, a position for supplying the discharge oil of the hydraulic pump 28 to the left-side cylinder chamber 36L and communicatively connecting the right-side cylinder chamber 36R to the tank 40. The right-side supply position 42R is a position for making a communication between the P port and the B port and a communication between the T port and the A port, that is, a position for supplying the discharge oil of the hydraulic pump 28 to the right-side cylinder chamber 36R and communicatively connecting the left-side cylinder chamber to the tank 40.

Furthermore, the power steering device has a bypass line 50. The bypass line 50 is provided between the left-side cylinder pipe 38L and the right-side cylinder pipe 38R, bypassing the control valve 32 to provide a communication between the pipes 38L and 38R.

Specifically, the bypass line 50 has a bypass pipe 52 and a restriction valve 54. the bypass line 50 is connected to the left-side cylinder pipe 38L and the right-side cylinder pipe 38R so as to provide a direct communication between the left-side cylinder chamber 36L and the right-side cylinder chamber 36R. The restriction valve 54 restricts the flow amount of the hydraulic oil in the bypass pipe 52 (bypass flow amount). The opening of the restriction valve 54 is set to give it the flow characteristics for allowing the bypass line 50 to exercise a certain function, as follows.
1) When the steering wheel 16 is kept in the neutral position, the control valve 32 is kept in the communication position 42C to let the discharge oil of the hydraulic pump 28 out to the tank 40 and communicatively connect the cylinder chambers 36L and 36R of the power cylinder 30 to the tank 40. Accordingly, no axial force (no assist force) is applied to the tie rod 14.
2) When the steering wheel 16 is rotationally operated to a certain direction, such as to the left, in the above state, the control valve 32 is operated in synchronization with the rotation of the steering wheel 16 and of the steering shaft 18, shifted from the above communication position 42C to the left-side supply position 42L; thus, the discharge oil of the hydraulic pump 28 is led to the left-side cylinder chamber 36L of the power cylinder 30 through the left-side cylinder pipe 38L, and the right-side cylinder chamber 36R is communicatively connected to the tank 40. The piston 34 of the power cylinder 30 is thereby moved to the right, supplying the axial force (assist force) in the same direction to the tie rod 14, thus reducing the operation force acting on the steering wheel 16 for rotating it to the left.
   At this moment, although the flow of the hydraulic oil from the control valve 32 toward the left-side cylinder pipe 38L is split and a part of it flows into the bypass pipe 52 of the bypass line 50, the opening of the restriction valve 54 of the bypass line 50 is so restricted as to keep the pressure supplied to the left-side cylinder chamber 36L high enough to operate the piston 34 regardless of the split flow. In short, the bypass flow amount obtained through the bypass pipe 52 is restricted.
3) When the rotational operation force on the steering wheel 16 is released in the above state, the road surface gives the steered wheels 10L and 10R a force to automatically return them to the position where the steering angle is 0 (the straight traveling position corresponding to the neutral position of the steering wheel 82), in other words, a force to return the steering wheel 16 to the neutral position and return the control valve 32 to the communication position 42C. Herein, the time required for return of the wheels is effectively shortened by a simple configuration having the bypass line 50 for providing a communication between the cylinder chambers 36L and 36R.

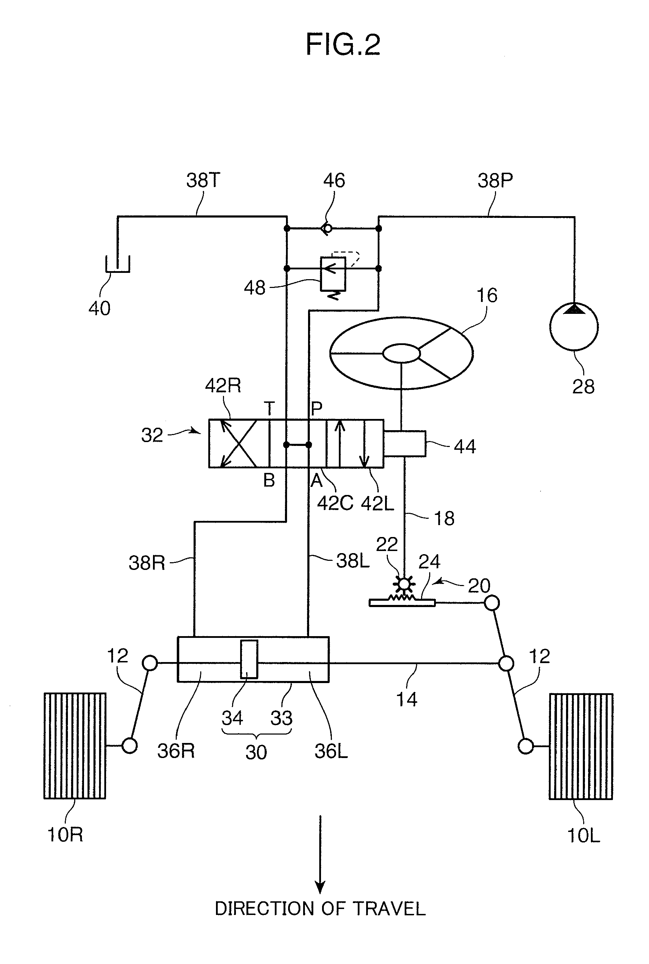

This effect will be described below, by comparing the power steering device with the device of the comparative example shown in FIG. 2. the comparative example device includes no bypass line, having a power cylinder 30 with cylinder chambers 36L and 36R, but the chambers 36L and 36R are simply connected to the control valve 32. In this device, the flow path resistance of an oil passage within the control valve 32 is so large as to suppress the flow of the hydraulic oil out of the left-side cylinder chamber 36L and the flow of the hydraulic oil into the right-side cylinder chamber 36R, thus delaying the operation of the piston 34. This piston 34 functions as a brake suppressing the return of the steering mechanism including the tie rod 14 to the straight traveling position (the position corresponding to the neutral position of the steering wheel 16), resulting in inhibition of the prompt return.

On the other hand, the device shown in FIG. 1 includes the bypass line 50 provided between the left-side cylinder pipe 38L and the right-side cylinder pipe 38R, and the restriction valve 54 provided in the bypass line 50, the opening of the valve 54 being set to permit the hydraulic oil to directly flow from the left-side cylinder chamber 36L to the right-side cylinder chamber 36R: this flow prompts the return action of the piston 34 to the central position, thus enabling the vehicle to promptly return to the straight traveling state. In other words, the bypass line 50 not only lets the hydraulic oil in the left-side cylinder chamber 36L out to the bypass line 50 side, but also allows the hydraulic oil to flow into the right-side cylinder chamber 36R on the other side, thereby effectively prompting the piston 34 to return to the central position (the position corresponding to the central position of the steering wheel 16). This effect of return promotion can be obtained also in the case where the release of the operating force is performed when the steering wheel 16 is steered to the right.

In summary, this power steering device can establish both of the effective assistance of the steering operation and the prompt return of the vehicle to the straight traveling state because of the following A and B.
A) The bypass flow amount obtained through the bypass line 50 is restricted so as to ensure the supply pressure of the hydraulic oil (the supply pressure for the left-side cylinder chamber 36L or the right-side cylinder chamber 36R) high enough to operate the power cylinder 30 at least when the control valve 32 is shifted to the left-side supply position 42L or the right-side supply position 42R.
B) the opening of the restriction valve 54 is set so as to obtain the flow characteristic which allows the hydraulic oil to circulate from one of the cylinder chambers (the left-side cylinder chamber 36L, for example) to the other cylinder chamber (the right-side cylinder chamber 36R, for example) when the piston 34 of the power cylinder 30 returns to the position corresponding to the neutral position of the steering wheel 16 (that is, central position).

The type of the restriction valve 54 may be either a fixed type having a constant opening or a variable type having an adjustable opening. In the former case will be selected a restriction valve whose fixed opening gives the above-described flow characteristic; in the latter case will be adjusted the variable opening so as to obtain the flow characteristic described above. Besides, the restriction valve 54 may be omitted when the bypass pipe 52a is so small-diameter and so long sized as to obtain the above flow characteristic by itself.

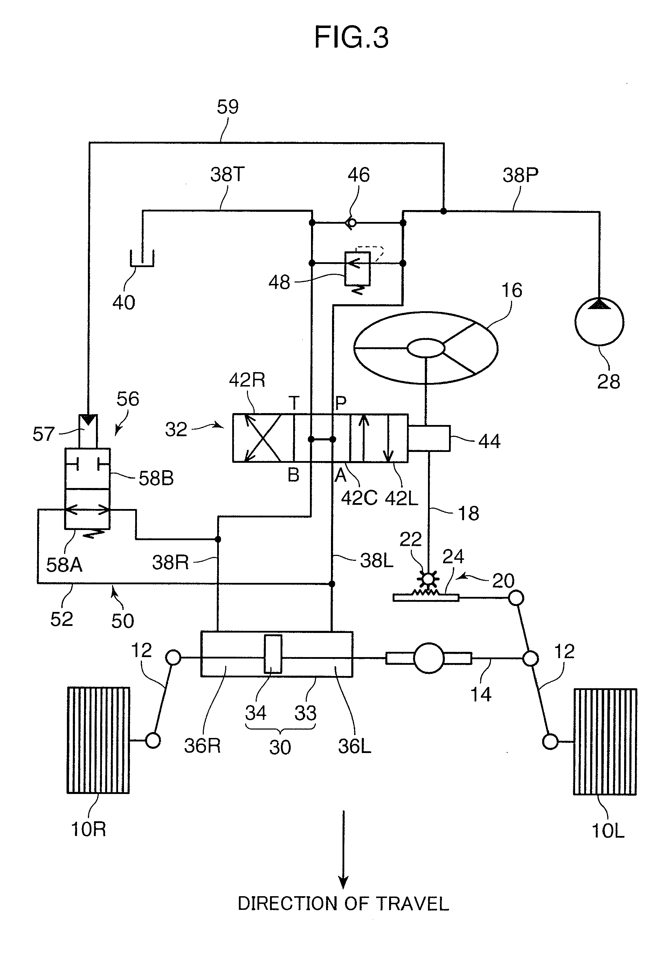

FIG. 3 shows a device according to a second embodiment of the present invention. Also this device comprises a bypass line 50 and a bypass pipe 52 like the device shown in FIG. 1; however, provided in the bypass line 50 is a pilot controlled valve 56 in place of the restriction valve 54 shown in FIG. 1. The pilot controlled valve 56 has a pilot port 57 into which pilot pressure is supplied, and can be shifted between an opening position 58A for opening the bypass pipe 52 and a shut-off position 58B for shutting the bypass pipe 52. The pilot controlled valve 56 has such a characteristic that the opening thereof is reduced as the pilot pressure is raised. Specifically, the pilot controlled valve 56 includes a spring force: the spring force keeps the pilot controlled valve 56 at the opening position 58A when the pilot pressure is equal to or lower than fixed pressure, while allowing the pilot pressure to shift the valve 56 toward the shut-off position 58B when the pilot pressure exceeds the spring pressure. In other words, the pilot valve.

The pilot port 57 is connected to the pump pipe 38P via a pilot pipe 59. The pilot pipe 59 functions as a pilot line which leads the discharge pressure of the hydraulic pump 28 to the pilot port 57 as the pilot pressure of the pilot controlled valve 56.

In this device, the opening/closing action of the pilot controlled valve 56 realizes both of a good assistance operation of the power steering device when the steering wheel 16 is steered, and prompt return of the vehicle to the straight traveling state when the operating force is released.

Specifically, when the steering wheel 16 is operated to the left or to the right, the control valve 32 is shifted to the left-side supply position 42L or the right-side supply position 42R, and the discharge pressure of the hydraulic pump 28 is increased by the load of the power cylinder 30. The increased discharge pressure is input as the pilot pressure to the pilot controlled valve 56 through the pilot pipe 59, thus shifting the pilot controlled valve 56 to the shut-off position 58B, that is, making the valve 56 shut off the bypass pipe 52. This ensures sufficient supply pressure for the left-side cylinder chamber 36L or the right-side cylinder chamber 36R of the power cylinder 30, thereby securing a good assist operation of the power cylinder 30.

When the operating force on the steering wheel 16 is released while the steering wheel 16 is steered as above-mentioned, the road surface gives wheels 10L and 10R a self-aligning torque, which forces the steering wheel 16 to return to the neutral position so as to return the control valve 32 to the communication position 42C. At this moment, the pilot controlled valve 56 is shifted from the shut-off position 58B to the opening position 58A, which enables the steering wheel 16 and the wheels 10L and 10R to promptly return to the straight traveling state.

Specifically, the return action of the control valve 32 from the supply position (the left-side supply position 42L or the right-side supply position 42R) increases the flow amount of the discharge oil which is discharged from the hydraulic pump 28 and thereafter let out directly to the tank 40, thus reducing the discharge pressure of the hydraulic pump 28. This reduction of the discharge pressure involves a reduction of the pilot pressure input to the pilot port 57 of the pilot controlled valve 56, permitting the pilot controlled valve 56 to return to the opening position 58, that is, increasing the opening of the pilot controlled valve 56. The pilot controlled valve 56 thus opened allows the hydraulic oil in the expanded cylinder chamber (the left-side cylinder chamber 36L, for example) of the power cylinder 30 to flow directly into the other cylinder chamber (the right-side cylinder chamber 36R, for example) through the pilot controlled valve 56 (that is, to bypass the control valve 32). This accelerates the return action of the piston 34 of the power cylinder 30 to the neutral position, and further the return of the wheels 10L and 10R to the straight traveling position.

It should be noted that "pilot line" according to the present invention includes any one which can introduce a discharge pressure of a hydraulic pump into a pilot port of the pilot controlled valve as the pilot pressure. For example, the control valve 32 shown in FIG. 3 may be provided a pilot oil passage which is connected to the pilot port 57 of the pilot controlled valve 56 through a pilot pipe, so as to constitute a part of the pilot line when the control valve 32 is in the communication position 42C while be shut off when the control valve 32 is shifted to the left-side supply position 42L or the right-side supply position 42R.

In addition, the selector valve provided in the bypass line according to the present invention is not limited to the pilot controlled valve. For example, as with the control valve 32, the selector valve may be mechanically coupled to the steering shaft 18 or the like so as to be shifted from the opening position to the shut-off position in synchronization with the rotation of the steering wheel 16 and the steering shaft 18. Alternatively, the selector valve may be an electromagnetic one controlled by an input electric signal.

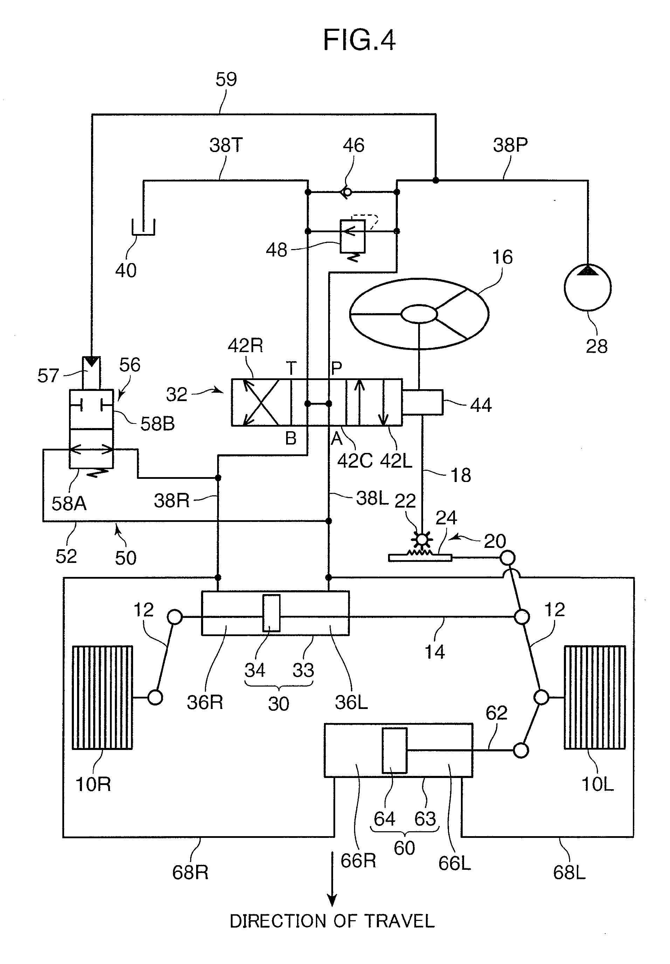

FIG. 4 shows a device according to a third embodiment of the present invention. This device comprises, in addition to the power cylinder 30 of the device shown in FIG. 3, an auxiliary sub-cylinder 60 arranged in parallel with the power cylinder 30. This sub-cylinder 60, as with the power cylinder 30, operates to reduce an operation force of the steering wheel 16, having a cylinder main body 63 and a piston 64 loaded slidably in the cylinder main body 63. The piston 64 is coupled to one of knuckle arms 12 via a rod 62 (in FIG. 4, to the left knuckle arm 12 coupled to the conversion mechanism 20).

The piston 64 partitions the inside of the cylinder main body 63 into a rod-side chamber 66L, which is a left-side cylinder chamber, and a head-side chamber 66R, which is a right-side cylinder chamber. The rod-side chamber 66L is communicatively connected to the left-side cylinder pipe 38L through a left-side sub-cylinder pipe 68L, and the head-side chamber 66R is communicatively connected to the right-side cylinder pipe 38R via a right-side sub-cylinder pipe 68R. In other words, the left-side sub-cylinder pipe 68L diverges from the middle of the left-side cylinder pipe 38L to reach the rod-side chamber 66L, while the right-side sub-cylinder pipe 68R diverges from the middle of the right-side cylinder pipe 38R to reach the head-side chamber 66R.

In this device, when the control valve 32 is shifted to, for example, the left-side supply position 42L by the operation of the steering wheel 16, the pilot controlled valve 56 is shifted to the shut-off position 58B to shut off the bypass pipe 52, while the discharge oil of the hydraulic pump 28 is supplied to the left-side cylinder chamber 36L of the power cylinder 30 and the rod-side chamber 66L on the same side in the sub-cylinder 60 simultaneously. This oil supply operates the power cylinder 30 and the sub-cylinder 60 in the same direction and at the same time, so that the cylinders 30 and 60 collaborate with each other to reduce the operating force of the steering wheel 16.

When the operating force of the steering wheel 16 is released in the above state to return the control valve 32 to the communication position 42C, the pilot controlled valve 56 returns from the shut-off position 58B to the opening position 58A, thus allowing the hydraulic oil within the left-side cylinder chamber 36L of the power cylinder 30 and the hydraulic oil within the rod-side chamber 66L of the sub-cylinder 60 to flow directly into the right-side cylinder chamber 36R of the power cylinder 30 and the head-side chamber 66R of the sub-cylinder 60 through the pilot controlled valve 56, respectively (that is, the control valve 32 is bypassed). This prompts the piston 34 of the power cylinder 30 and the piston 64 of the sub-cylinder 60 to return to the central positions (the position corresponding to the central position of the steering wheel 16).

Thus, the present invention is not limited to the number of cylinders equivalent to the power cylinder. Besides, in a device comprising a plurality of power cylinders, the bypass line according to the present invention can be only a part of the power cylinders (preferably the cylinders with a large cross-sectional area).

The present invention provides a power steering device which can effectively reduce the operating force of a steering wheel and shorten the time from a release of the operating force to return of a vehicle to a straight traveling state. The device has a hydraulic pump 28, a power cylinder 30, a control valve 32 interposed therebetween, and a bypass line 50. The control valve 32 operates in synchronization with a steering wheel operation so as to be shifted between a communication position 42C for communicating cylinder chambers 36L and 36R of the power cylinder 30 with a tank 40, and a left-side supply position 42L and a right-side supply position 42R for introducing discharge oil of the hydraulic pump 28 to the cylinder chamber corresponding to the direction of the operation. The bypass line 50 bypasses the control valve 32 to allow hydraulic oil to flow from the expanded cylinder chamber to the contracted cylinder chamber, when the control valve 32 returns from either the supply position to the communication position.

## Claims

1. A power steering device for reducing an operating force of a steering wheel for changing a steering angle of a wheel,
the power steering device comprising:
a hydraulic pump that discharges hydraulic oil;
a power cylinder that has a cylinder main body and a piston accommodated slidably in the cylinder main body to partition the inside of the cylinder main body into left-side and right-side cylinder chambers, either one of the cylinder chambers receiving a supply of discharge oil, which is the hydraulic oil discharged from the hydraulic pump, to operate the power cylinder in a direction corresponding to the cylinder chambers receiving the oil supply to reduce the operating force of the steering wheel;
a control valve interposed between the hydraulic pump and the power cylinder, the control valve having a communication position for communicatively connecting both of the cylinder chambers of the power cylinder to a tank while letting the discharge oil escape into the tank, a left-side supply position for introducing the discharge oil into the left-side cylinder chamber of the power cylinder, and a right-side supply position for introducing the discharge oil into the right-side cylinder chamber of the power cylinder, the control valve operating in synchronization with the steering wheel so as to stay at the communication position when the steering wheel is in a neutral position while being shifted to the left-side supply position or the right-side supply position corresponding to the operation of the steering wheel from the neutral position; and
a bypass line that provides a direct communication between the left-side cylinder chamber and the right-side cylinder chamber, bypassing the control valve,
the bypass line having a flow characteristic that restricts a bypass flow amount of the hydraulic oil flowing through the bypass line to ensure supply pressure of the hydraulic oil enough to enable the power cylinder to operate at least when the control valve is shifted to the left-side supply position or the right-side supply position, while allows the hydraulic oil to flow from one of the cylinder chambers to the other when the control valve returns from the left-side supply position or the right-side supply position to the communication position.

2. The power steering device according to claim 1, wherein the bypass line has a bypass pipe providing a direct communication between the left-side cylinder chamber and the right-side cylinder chamber, and a flow amount restricting section that restricts the flow amount of the hydraulic oil in the bypass pipe so as to obtain the flow characteristics.

3. The power steering device according to claim 2, wherein the flow amount restricting section has a restriction valve.

4. The power steering device according to claim 2, wherein the flow amount restricting section has a selector valve whose opening is so variable as to change the flow amount in the bypass pipe, and a selector valve operating section that increases the opening of the selector valve when the control valve is in the communication position compared with the opening when the control valve is in the left-side supply position or the right-side supply position.

5. The power steering device according to claim 4, wherein
the selector valve is a pilot controlled valve that includes a pilot port into which pilot pressure is supplied and has a characteristic of reducing an opening thereof as the pilot pressure to be supplied increases, and
the selector valve operating section has a pilot line that leads discharge pressure of the discharge pump to the pilot port as the pilot pressure.
